# EUROPÄISCHE PATENTSCHRIFT

(11) **EP 1 419 208 B1**
(45) Veröffentlichungstag und Bekanntmachung des Hinweises auf die Patenterteilung: **01.12.2004**
(21) Anmeldenummer: 02760201.0
(22) Anmeldetag: 27.06.2002
(51) Int. Cl.: C09J 183/10, C09J 175/02, C08G 18/61, C08G 77/458

(54) **FEUCHTIGKEITSVERNETZENDE ELASTISCHE ZUSAMMENSETZUNG**
MOISTURE CROSS-LINKING ELASTIC COMPOSITION
COMPOSITION ELASTIQUE RETICULABLE A L'HUMIDITE

(30) Priorität: 23.08.2001 DE 10141235
(43) Veröffentlichungstag der Anmeldung: 19.05.2004
(73) Patentinhaber: Consortium für elektrochemische Industrie GmbH, 81379 München (DE)
(72) Erfinder: SCHINDLER, Wolfram, 84577 Tüssling (DE); SCHÄFER, Oliver, 81377 München (DE); CHATZINERANTZIS, Martina, 82054 Sauerlach (DE); PACHALY, Bernd, 84561 Mehring (DE)
(74) Vertreter: Fritz, Helmut, Dr.
(86) Internationale Anmeldenummer: PCT/EP2002/007126
(87) Internationale Veröffentlichungsnummer: WO 2003/018704

(56) Entgegenhaltungen:
- EP-A- 0 250 248
- WO-A-96/34030
- WO-A-98/12075

## Beschreibung

Die Erfindung betrifft eine einkomponentige, reaktive, feuchtigkeitsvernetzende Zusammensetzung auf Basis von Polydimethylsiloxan-Urea/Urethan-Copolymeren mit Alkoxysilanendgruppen und deren Verwendung als Schmelzklebstoff.

Schmelzklebstoffe sind in der Regel physikalisch abbindende Klebstoffe, die bei Raumtemperatur einkomponentig in fester, im wesentlichen lösungsmittelfreier Form vorliegen. In Anlehnung an den angelsächsischen Sprachgebrauch werden diese auch als "hotmelts" bezeichnet.
Die Polymerkomponenten oder Bindemittel derartiger Schmelzkleber haben einen vorwiegend linearen kettenförmigen Aufbau und befinden sich bei Raumtemperatur in einem amorphen, glasartigen oder teilkristallinen Zustand. Zur Erreichung und Einstellung weiterer spezieller Eigenschaften wie z.B. Kohesionsfestigkeit, Viskosität, Erweichungspunkt oder Abbindegeschwindigkeit können in der Klebstoffformulierung weitere Zusätze notwendig sein. Hierzu gehören klebrigmachende Harze zur Verbesserung der Benetzungseigenschaften und Erhöhung der Adhäsion, Weichmacher zur Erhöhung der Flexibilität und Erniedrigung der Schmelzviskosität, Stabilisatoren und Antioxidantien zur Verminderung der oxidativen Veränderung während der Verarbeitung der Schmelze unter Sauerstoffeinfluss, sowie zur Verbesserung des Alterungsverhaltens der geklebten Fuge. Weiterhin können Füllstoffe zur Festigkeitserhöhung und gegebenenfalls zur Kostenreduzierung eingesetzt werden. Die wichtigsten Schmelzkleber basieren auf Bindemittelsystemen wie Polyurethane, Epoxidharze, Polyamide, Ethylen-Vinylacetat-Copolymere, Styrol-Blockcopolymere, gesättigte Polyester, Polyolefin-Copolymere, synthetische Kautschuke und Mischungen dieser Systeme.

Während die amorphen Polymere über einen mehr oder weniger breiten Temperaturbereich erweichen, zeigen die kristallinen oder teilkristallinen einen mehr oder weniger scharfen Schmelzpunkt. Amorphe Systeme von Copolyestern beispielsweise zeigen vielfach selbst bei hohen Molmassen einen noch vorhandenen kalten Fluss und sind daher nur eingeschränkt oder nur in Kombination mit sehr hochmolekularen Copolymeren brauchbar.

Ein Weg um die Kohesionsfestigkeit und Warmformbeständigkeit (Klebeeigenschaften auch bei höherer Gebrauchstemperatur) von Schmelzklebstoffen zu erhöhen ist die Verwendung von reaktiven Klebstoffen. Als besondere Form der Hotmelts sind solche reaktive Formulierungen bekannt, die eine Kombination aus physikalisch abbindenden und chemisch reagierenden Systemen darstellen. Dazu werden in der Regel hydroxyfunktionelle Polyester mit einem Überschuss an Diisocyanaten umgesetzt und daraus isocyanatterminierte Polymere hergestellt. Diese können nun bei Zutritt von Luftfeuchtigkeit unter Vernetzung aushärten. Da die Polyurethan-Hotmelts systembedingt mehrere Schwächen aufweisen wie Isocyanat-Monomer-Emission (monomere aromatische Diisocyanate wie MDI oder TDI, bzw. deren korespondierenden Amine stehen unter Verdacht krebserregend zu sein), CO₂-Abspaltun die zur Blasenbildung führt oder die Vergilbungsneigung bei aromatischen Isocyanaten werden derzeit auch viele Systeme auf Basis silanvernetzender Polymere entwickelt, die bezüglich der oben genannten Nachteile eine aussichtsreiche Alternative darstellen. Die Prepolymere werden dabei mit silanfunktionellen Monomeren umgesetzt, so dass daraus ebenso feuchtigkeitsnachvernetzende Schmelzklebstoffe herstellbar sind.

Zur Vereinfachung der Verarbeitung werden einkomponentige Systeme bevorzugt, da sie einfacher applizierbar und automatisierbar sind. Da im Falle von reaktiven Schmelzklebern die Nachhärtungsgeschwindigkeit solcher einkomponentiger Massen meist moderat eingestellt wird, um eine ausreichende Lagerstabilität sicherzustellen, ist die Variation des Eigenschaftsprofils schwieriger. Probleme bei nicht nachvernetzenden Systemen sind hingegen hier meist die Warmformbeständigkeit (kalter Fluss, wieder aufschmelzbar), die mechanischen Eigenschaften und die Haftung auf dem Untergrund. Mit den oben beschriebenen feuchtigkeitshärtenden Systemen werden diese Nachteile weitgehend vermieden. Zweikomponentige Massen zeigen meist ein deutlich besseres Eigenschaftsprofil sind jedoch hinsichtlich der Verarbeitung problematisch. Die Mischung der Komponenten, z.B. über Statikmischer bei der Applikation, muss gleichmäßig sein um eine konstante Verarbeitungszeit und Endqualität sicherzustellen. Meist muss hier ein Kompromiss zwischen Aushärtzeit und Verarbeitungszeit getroffen werden. Der für zweikomponentige Kleber nötige apparative Aufwand ist ebenso deutlich größer und damit die Anwendung meist.teurer.

Organosiloxan-Copolymere, speziell Polydiorganosiloxan-Urethanund Polydiorganosiloxan-Urea-Copolymere sind bekannt. Die verschiedenen Systeme sind in der Übersicht von I. Yilgör und J.E. McGrath in Adv. Polym. Sci., 1988, 86, S. 1-86 beschrieben. Eine Vielzahl weiterer Veröffentlichungen und Patente beschäftigit sich mit speziellen Anwendungen von derartigen Blockcopolymeren. Polyurethane und Siliconelastomere sind in weiten Bereichen komplementär. Daher liefert die Kombination beider Systeme Materialien mit neuartigen, ausgezeichneten Eigenschaften. Polyurethane zeichnen sich durch ihre gute mechanische Festigkeit, Elastizität und eine sehr gute Haftung und Abriebfestigkeit aus. Siliconelastomere dagegen besitzen eine ausgezeichnete Temperatur, UV-, Bewitterungsstabilität und speziellen Oberflächeneigenschaften (geringe Oberflächenspannung). Dabei behalten sie ihre elastischen Eigenschaften bei tieferen Temperaturen bei und neigen deshalb auch nicht zur Versprödung.

In der Übersicht von I. Yilgör et al. in Polymer, 1984 (25), S. 1800-1816 sind die Eigenschaften von Polydiorganosiloxan-Urea-Copolymeren genauer untersucht. Die Silicon- und Isocyanat-Polymerbausteine sind in einem weiten Bereich problemlos mischbar. Die mechanischen Eigenschaften werden durch das Verhältnis der unterschiedlichen Polymerblöcke bestimmmt. Die Polydiorganosiloxane bildeh dabei die sogenannten Weichsegmente und sind für die Elastizität entscheidend, die Diisocyanate bilden die Hartsegmente und sind für die mechanischen Eigenschaften ausschlaggebend. Durch Ausbildung von Wasserstoffbrückenbindungen zwischen Urethan oder Harnstoff-Bindegruppen werden die mechanischen Eigenschaften bestimmt. Durch die starken Wechselwirkungen der Wasserstoffbrücken zwischen den Harnstoffeinheiten sind diese Massen meist sehr hoch viskos oder fest bei Raumtemperatur.

In den oben genannten Übersichten werden eine Vielzahl von Anwendungen und Anwendungsmöglichkeiten beschreiben und diskutiert. In EP-A-250248 wird die Herstellung und eine mögliche Anwendung dieser Copolymere für Antihaftbeschichtungen und Haftklebstoffe beschrieben. In WO 96/34030 wird ferner eine mögliche Herstellung von Polysiloxan-Urea-Copolymere mit reaktiven und nichtreaktiven Endgruppen beschrieben. Als reaktive Endgruppen werden dabei unter anderem auch Alkoxysilane zur Endterminierung der Polymere eingesetzt.

Gegenstand der vorliegenden Erfindung sind feuchtigkeitsvernetzbare Zusammensetzungen, enthaltend
(A) 100 Gewichtsteile an silanterminiertem Polydiorganosiloxan-Urea/Urethan-Copolymer der allgemeinen Formel 1 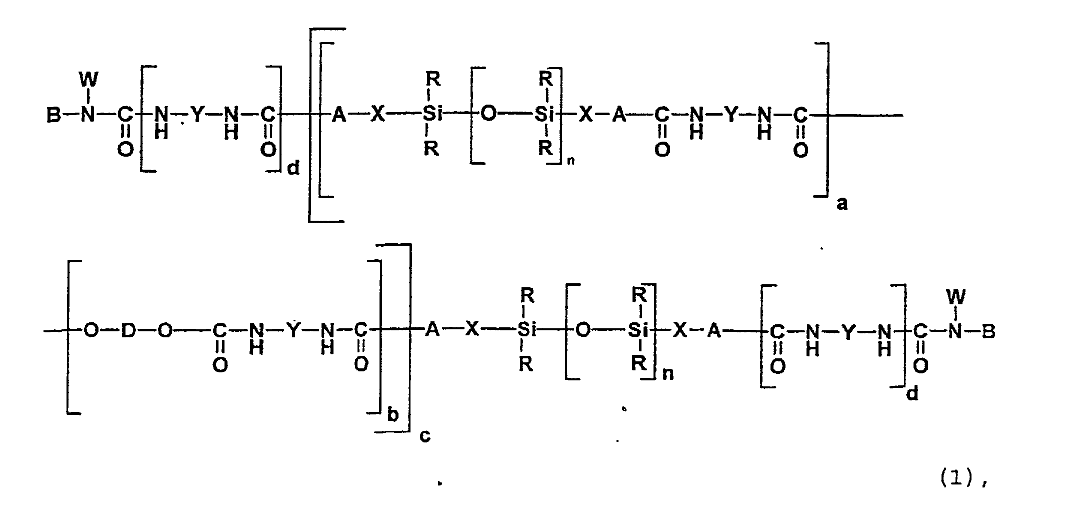 worin
   - R: einen einwertigen, gegebenenfalls durch Fluor oder Chlor substituierten Kohlenwasserstoffrest mit 1 bis 20 Kohlenstoffatomen,
   - X: einen Alkylen-Rest mit 1 bis 20 Kohlenstoffatomen, in dem einander nicht benachbarte Methyleneinheiten durch Gruppen -O- ersetzt sein können,
   - A: ein Sauerstoffatom oder eine Aminogruppe -NR'-,
   - R': Wasserstoff oder einen Alkylrest mit 1 bis 10 Kohlenstoffatomen,
   - Y: einen gegebenenfalls durch Fluor oder Chlor substituierten Kohlenwasserstoffrest mit 1 bis 20 Kohlenstoffatomen,
   - D: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder-OCOO-, ersetzt sein können,
   - B: einen Rest der allgemeinen Formel 2

   7 - Z-Si (R¹)ₘ(R")₃₋ₘ (2),
   - Z: einen Methylen Rest,
   - R¹: einen einwertigen, gegebenenfalls durch Fluor oder Chlor substituierter Kohlenwasserstoffrest mit 1 bis 12 Kohlenstoffatomen,
   - R": einen mit Feuchtigkeit reaktiven Rest, der ausgewählt wird aus C₁-C₄-Alkoxy-, C₁-C₂₀-Acyl-, C₁-C₆-Alkylaminooxy- und C₁-C₆-Alkyloximoresten,
   - W: einen Rest B oder Wasserstoff,
   - m: den Wert 0, 1 oder 2,
   - n: eine ganze Zahl von 1 bis 300,
   - a: eine ganze Zahl von mindestens 1,
   - b: 0 oder eine ganze Zahl von 1 bis 30,
   - c: eine ganze Zahl von 1 bis 30 und
   - d: den Wert 0 oder 1 bedeuten, mit der Maßgabe, dass die Zusammensetzung der Einheiten so gewählt ist, das das Copolymer einen Schmelzpunkt im Bereich von 30 - 200 °C besitzt und
(B) 0,1 bis 20 Gewichtsteile an Silan der allgemeinen Formel 3

   Ω-(CH₂)ₑ-Si(R²)_{3-f}(CH₃)_{f} (3)

   wobei
   - **Ω**: eine Gruppe, die ausgewählt wird aus -NHR³, - NR³-(CH₂)_{g}-NHR³, Acryl-, Methacryl-, OCN-, -SH, Glycidoxyoder Chlorrest,
   - **R**^{**3**}: Wasserstoff oder einen gegebenenfalls halogensubstuierten C₁₋₁₈-Kohlenwasserstoffrest,
   - **R**^{**2**}: eine Methoxy- oder Ethoxygruppe,
   - **e**: die Werte 1 oder 3
   - **f**: die Werte 0 oder 1 und
   - **g**: Werte von 1 bis 10 bedeuten.

Die Zusammensetzungen auf Basis Polydimethylsiloxan-Urea/Urethan-Copolymeren sind sehr gut als einkomponentige, reaktive, über Silanendgruppen feuchtigkeitsvernetzende Schmelzkleber einsetzbar. Copolymer (A) ist im Schmelzkleber Bindemittel und Silan (B) wirkt als Haftvermittler. Durch die geeignete Wahl der Polymerbausteine bei der Herstellung der silanterminierten Copolymere sind so Schmelzkleber zugänglich, die sich durch hervorragende mechanische Eigenschaften und sehr gute Haftungseigenschaften auszeichen. Ferner können die Anwendungseigenschaften wie Auftragstemperatur, Schmelzviskositäten und Verarbeitungseigenschaften in einem weiten Bereich eingestellt werden.

Der Schmelzklebstoff wird in Form einer einkomponentigen festen Masse verarbeitet und muss somit vor Applikation nicht zusätzlich bei höherer Temperatur mit weiteren Komponenten vermischt werden. Nach dem Heißauftrag bildet der Schmelzkleber nach Abkühlung ein elastisches vorverfestigtes Material. Durch Zutritt von Luftfeuchtigkeit härtet der Klebstoff unter Ausbildung eines Netzwerks über Silankondensation aus. Aufgrund der hohen mechanischen Festigkeit und der guten Haftungseigenschaften über die Silanendgruppen kann der Schmelzkleber für einen weiten Bereich von elastischen Verbindungen von Formteilen eingesetzt werden.

Vorzugsweise bedeutet R dabei einen einwertigen, Kohlenwasserstoffrest, vorzugsweise Alkylrest mit 1 bis 6 Kohlenstoffatomen, insbesondere nicht substituiert. Besonders bevorzugte Reste R sind Methyl und Phenyl.

Vorzugsweise bedeutet X einen Alkylen-Rest mit 2 bis 10 Kohlenstoffatomen. Vorzugsweise ist der Alkylen-Rest X nicht unterbrochen. Besonders bevorzugt ist X ein n-Propylenrest.

Vorzugsweise bedeutet A eine Aminogruppe, d.h. Polysiloxan-Harnstoff-Copolymere sind bevorzugt.

Vorzugsweise bedeutet R' Wasserstoff oder einen Alkylrest mit 1 bis 3 Kohlenstoffatomen, insbesondere Wasserstoff.

Vorzugsweise bedeutet Y einen Kohlenwasserstoffrest mit 3 bis 13, insbesondere 6 Kohlenstoffatomen, der vorzugsweise nicht substituiert ist.

Vorzugsweise bedeutet D einen Alkylenrest mit 2 bis 20, insbesondere 10 Kohlenstoffatomen, besonders bevorzugt ist ein Rest mit vier Kohlenstoffatomen. Ebenfalls vorzugsweise bedeutet D einen Polyoxyalkylenrest, insbesondere Polyoxyethylenrest oder Polyoxypropylenrest mit mindestens 10 höchstens 200 Kohlenstoffatomen.

R¹ bedeutet vorzugsweise einen unsubstituierten Kohlenwasserstoffrest mit 1 bis 4 Kohlenstoffatomen, insbesondere Methyl.

Vorzugsweise bedeutet R" einen Methoxy-, Ethoxy oder Acetoxyrest.

n bedeutet vorzugsweise eine ganze Zahl von mindestens 3, insbesondere mindestens 10 und vorzugsweise höchstens 200, insbesondere höchstens 50.

a bedeutet vorzugsweise eine ganze Zahl von mindestens 2, insbesondere mindestens 5 und vorzugsweise höchstens 50, insbesondere höchstens 20.

b bedeutet vorzugsweise ganze Zahl von höchstens 10,

c bedeutet vorzugsweise eine ganze Zahl von mindestens 2, und vorzugsweise höchstens 10.

Die Polydiorganosiloxanabschnitte im Copolymer (A) weisen bevorzugt eine Molekulargewicht Mw von 500 bis 30000, insbesondere 1000 bis 8000, besonders bevozugt 2000 bis 4000 auf.

Die Copolymere (A) der allgemeinen Formel 1 können hergestellt werden durch Umsetzung von aminoalkyl- oder hydroxyalkylterminierten Polydiorganosiloxanen der allgemeinen Formel 4 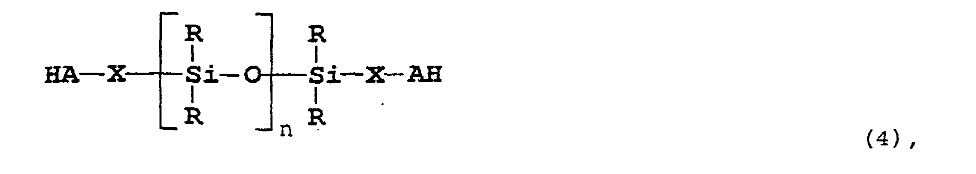 mit Diisocyanaten der allgemeinen Formel 5

OCN-Y-NCO (5),

und Silanen der allgemeinen Formel 6

E[-Z-Si(R¹)ₘ(R'')₃₋ₘ]ₚ (6),

und falls b mindestens 1 ist, zusätzlich mit α,ω-OHterminierten Alkylenen der allgemeinen Formel 7

HO-D-OH (7),

wobei R, X, A, R', Y, D, B, Z, R¹, R'', W, m, n, a, b, c und d die bei den allgemeinen Formeln 1 und 2 angegebenen Bedeutungen aufweisen und
- **p**: den Wert 1,
- **E**: eine Isocyanatgruppe oder eine Aminogruppe -NHR''', wobei R''' Wasserstoff oder einen einwertigen, gegebenenfalls durch Fluor oder Chlor substituierten Kohlenwasserstoffrest mit 1 bis 12 Kohlenstoffatomen bedeutet, oder
- **p**: den Wert 2 und
- **E**: einen -NH-Rest bedeuten.

Die Polydiorganosiloxane der allgemeinen Formel 4 sind vorzugsweise weitgehend frei von Kontaminationen aus höherfunktionellen und monofunktionellen Bestandteilen. Monofunktionelle Bestandteile führen bei der Umsetzung zum Polymer zu nicht reaktiven Endgruppen, die in der Endterminierung durch die Silane nicht mehr umgesetzt werden können. Nicht reaktive Endgruppen führen zur Problemen beim Polymeraufbau während der Umsetzung und ergeben Produkte, die teilweise zu einem unerwünschten Ausbluten aus dem Vulkanisat führen können. Höherfunktionelle Polydiorganosiloxane sind ebenso unerwünscht, da diese bei der Umsetzung mit Diisocyanaten zur Bildung von Vernetzungspunkten führen, die bereits zu einer Verzweigung der Polymerketten bei der Polyadditonsreaktion führen. Derartig vorvernetzte Materialien sind hinsichtlich der Verarbeitung meist unbrauchbar.

Die Herstellung geeigneter Aminoalkylpolydiorganosiloxane ist bekannt und kann beispielsweise wie von J.J. Hoffmann, C.M. Leir in Polymer Int. 1991 (24), S- 131-138 beschrieben durchgeführt werden. Ebenso bekannt ist die Herstellung von Hydroxyalkylpolydiorganosiloxanen, welche z.B. über Hydrosilylierung von α,ω-Dihydridopolydiorganosiloxane mit α,ω-Hydroxyalkylenen erfolgt. Derartige Produkte sind kommerziell verfügbar.

Die Polydiorganosiloxane der allgemeinen Formel 4 weisen bevorzugt ein Molekulargewicht Mw von 500 bis 30000, insbesondere 1000 bis 8000, besonders bevozugt 2000 bis 4000 auf.

Die α,ω-OH-terminierten Alkylene der allgemeinen Formel 7 sind bevorzugt Polyalkylene oder Polyoxyalkylene. Diese sollten aus den gleichen Gründen, wie bei den Polydiorganosiloxanen beschrieben, weitgehend frei von Kontaminationen aus mono-, tri- oder höherfunktionellen Polyoxyalkylenen sein. Hierbei können Polyetherpolyole, Polytetramethylendiole, Polyesterpolyole, Polycaprolactondiole aber auch α,ω-OHterminierte Alkyle oder Polyalkylene mit zwei bis 10 Kohlenstoffatomen oder auf Basis von Polyvinylacetat, Polyvinylacetatethylencopolymere, Polyvinylchloridcopolymer, Polyisobutlydiole eingesetzt werden. Bevorzugt werden dabei α,ω-Diole wie Ethandiol, Butandiol oder Hexandiol. Derartige Verbindungen sind ebenfalls kommerziell erhältlich.

Bei der Herstellung des Copolymeren (A) der allgemeinen Formel 1 können Aminoalkylpolydiorganosiloxane der allgemeinen Formel 4, bei der A eine Aminogruppe -NR'- bedeutet, oder Hydroxyalkylpolydiorganosiloxane der allgemeinen Formel 4, bei der A eine Hydroxygruppe -OH bedeutet oder ein Gemisch von Aminound Hydroxyalkylpolydiorganosiloxan, mit oder ohne α,ω-OHterminierte Alkylene der allgemeinen Formel 7 eingesetzt werden. Besonders bevorzugt wird nur Aminoalkylpolydiorganosiloxan eingesetzt, wobei durch Zusatz von α,ω-OH-terminierten Alkylenen, speziell 1,4-Butandiol, die mechanischen Eigenschaften der Vulkanisate noch verbessert werden können.

Beispiele für Diisocyanate der allgemeinen Formel 5 sind aliphatische Verbindungen wie Isophorondiisocyanat, Hexamethylen-1,6-diisocyanat, Tetramethylen-1,4-diisocyanat und Methylendicyclohexy-4,4'-diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-mxyloldiisocyanat oder Mischungen dieser Isocyanate.

Der Schmelzpunkt der Copolymere (A) wird wesentlich durch das verwendete Diisocyanat bestimmt. Vorzugsweise beträgt der Schmelzpunkt des Copolymeren (A) 50 bis 200°C, insbesondere 60 bis 150 °C, besonders bevorzugt 70 bis 120 °C.
Der Schmelzpunkt der Copolymere (A) liegt bei reinen Polydiorganosiloxan-Urea-Copolymeren im Bereich von 50 - 80 °C bei Verwendung von aliphatischen Diisocyanaten zum Polymeraufbau und kann Werte bis 200 °C bei aromatischen Diisocyanaten erreichen.-Der Einbau von Urethaneinheiten, beispielsweise über Hydroxyalkylpolydimethylsiloxane oder über α,ω-OH-terminierten Alkylene führt in der Regel zur Absenkung der Schmelzpunkts beziehungsweise zu einer Verbreiterung der Schmelzbereichs.

Die Silane der allgemeinen Formel 6 können reaktive Gruppen tragen, die mit Isocyanatgruppen reagieren. Bevorzugt sind hier entsprechende Aminosilane. Ferner können auch Isocyanatosilane eingesetzt werden, die entsprechend mit den OH- und NH-Funktionen der Präpolymere umgesetzt werden können. Als reaktive Gruppen, die unter Feuchtigkeit aushärten, werden speziell Alkoxygruppen eingesetzt.

Die Copolymere (A) weisen Silanendgruppen der allgemeinen Formel 8

- CH₂-Si(R¹)ₘ(R'')₃₋ₘ (8)

auf. Diese können durch Umsetzung der Polydiorganosiloxane der allgemeinen Formel 4 mit Diisocyanaten der allgemeinen Formel 5 mit Silanen der allgemeinen Formel 9

E-CH₂-Si (R¹)ₘ (R'')₃₋ₘ (9)

erhalten werden. In den allgemeinen Formeln 8 und 9 haben E, R¹, R" und m die vorstehenden Bedeutungen. Vorzugsweise bedeuted E eine Isocyanatogruppe, R¹ Methyl, R" ein Methoxyoder Ethoxyrest und m ist gleich 0 oder 1.

Die Silanendgruppen der allgemeinen Formel 8 besitzen eine sehr hohe Reaktivität, bis zum Faktor 100 bezogen auf die Endgruppen der allgemeinen Formel (2) und zeigen daher hervorragende und schnelle Aushärtungseigenschaften der Schmelzkleber unter Luftfeuchtigkeit.

Beispiele für geeignete Silane sind Aminomethyltriethoxysilan, Aminomethyltrimethoxysilan, Aminomethylmethyldiethoxysilan, Aminomethylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan, Isocyanatomethyldimethylethoxysilan.

Besonders bevorzugt ist die Herstellung der Copolymere (A) unter Verwendung von Isocyanatoalkylsilane oder sekundäre Aminosilane, die zur Endterminierung besonders geeignet sind, da nach Umsetzung von OH/NH-terminierten Präpolymeren (erhalten aus der Reaktion der Polydiorganosiloxanen der allgemeinen Formel 4 bzw. α,ω-OH-terminierte Alkyle oder Polyalkylene der allgemeinen Formel 7 mit Diisocyanaten der allgemeinen Formel 5 keine weitere Vernetzungsreaktion mit den aus primären Aminosilanen entstandenen NH-Gruppen möglich ist. Derartige silanterminierte Copolymere sind in der Regel deutlich reproduzierbarer herzustellen.

Die Herstellung der Copolymere (A) und die anschließende Endterminierung kann sowohl in Lösung als auch im Extruder erfolgen. Wesentlich dabei ist, dass eine optimale und homogene Durchmischung der Bestandteile erfolgt. Phasenunverträglichkeit zwischen Siloxan und Polyethern können gegebenenfalls durch Lösungsvermittler verhindert werden.

Vorzugsweise werden zur Herstellung der Copolymere (A) die Komponenten im entsprechenden Molverhältnis in einem Reaktionsextruder umgesetzt.

Bei der Herstellung des Copolymers (A) wird vorzugsweise ein NCO/OH(NH)-Verhältnis über die Stöchiometrie von Diisocyanat der allgemeinen Formel 5 und OH/NH-terminiertem Polydimethylsiloxan der allgemeinen Formel 4 und gegebenenfalls von Alkylen der allgemeinen Formel 7 gewählt, das 0,75 bis 1,25, bevorzugt 0,9 bis 1,1, besonders bevorzugt 0,95 bis 1,05 beträgt. Die erforderliche Konzentration an Silan der allgmeinen Formel 6 wird so gewählt, dass im fertigen Copolymer kein Isocyanat mehr nachweisbar ist (bestimmbar über Standardmethoden wie IR-Spektroskopie).

Die Herstellung sollte für eine bessere Reproduzierbarkeit bevorzugt unter Ausschluss von Feuchtigkeit und unter Schutzgas, üblicherweise Stickstoff oder Argon erfolgen, um eine vorzeitige Aushärtung durch Hydrolyse der Silangruppen zu vermeiden. Ferner sollten die eingesetzten Polymerbausteine bevorzugt vorher ausgeheizt werden, um niedermolekulare Verunreinigungen und Wasserspuren zu entfernen.

Zur Herstellung der Copolymere (A) wird vorzugsweise ein Katalysator eingesetzt. Geeignete Katalysatoren für die Herstellung sind Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin. Dieser Katalysator ist gleichzeitig der Katalysator für die Silankondensation zur Vernetzung nach der Applikation. Im Falle der reinen Harnstoff-Copolymere kann die Polymerherstellung auch ohne Katalysator erfolgen, da sich die Amingruppen spontan und sehr rasch mit den Isocyanatgruppen umsetzten. Zur Beschleunigung der Aushärtung muss aber auch hier ein Katalysator in die Masse eingebracht werden. Interessant kann dies aber auch zur Herstellung katalysatorfreier Massen sein, die sich durch eine überaus gute Lagerstabilität auszeichnen. Im Falle sehr reaktiver Silane oder zur Herstellung schnell vernetzender Massen ist eine Einarbeitung eines reaktiven Katalysators direkt vor der Applikation ebenso denkbar.

Die Reaktionsverfolgung des Copolymeren (A) kann über verschiedene Analysemethoden durchgeführt werden. Die Umsetzung gilt als abgeschlossen, wenn die NCO-Bande im Infrarotspektrum nicht mehr nachweisbar ist.

Die Herstellung der Copolymere (A) erfolgt vorzugsweise in einem geeigneten Lösungsmittel. Dabei werden in einer bevorzugten Ausführungsform Polydiorganosiloxane der allgemeinen Formel 4 und gegebenenfalls Alkylene der allgemeinen Formel 7 mit Diisocyanaten der allgemeinen Formel 5 und Alkoxysilanen der allgemeinen Formel 6 umgesetzt und gegebenenfalls danach mit mit weiteren Bestandteilen versetzt, bevor das Lösungmittels entfernt wird.

Bei den ebenfalls in der Zusammensetzung enthaltenen Silanen (B) bedeutet Ω bevorzugt eine Gruppe, die ausgewählt wird aus einem Rest -NHR³, -NR³-(CH₂)_{g}-NHR³ und Glycidoxyrest.

R³ ist bevorzugt ein C₁₋₈-cyclischer, linearer oder verzweigter Alkylrest oder ein C₆₋₁₈-Arylrest, insbesondere ein C₁₋₆-Alkylrest.

g bedeutet vorzugsweise den Wert 2, 3, 4 oder 5.

Bevorzugte aminofunktionelle Silane (B) sind Aminopropyltrimethoxysilan, Aminopropyltriethoxysilan, Aminopropylmethyldimethoxysilan, Aminopropylmethyldiethoxysilan, Aminoethylaminopropyltrimethoxysilan, Aminoethylaminopropyltriethoxysilan, Bis-(trimethoxysilylpropyl)amin oder epoxyfunktionelle Silane wie Glycidoxypropyltrimethoxysilan, Glycidoxypropyltriethoxysilan.

In einer weiterhin bevorzugten Ausführungsform erfolgt die Herstellung der Copolymere (A) in einem Extruder ohne Zusatz von weiteren Lösungsmitteln. Bei der Herstellung der Zusammensetzung werden dann in einem zweiten Schritt Silan (B) und gegebenenfalls weitere Zusätze in das Copolymer (A) im Extruder eingearbeitet. Die extrudierte Zusammensetzung wird vorzugsweise unter Luftauschluss durch Abkühlen verfestigt und zerkleinert, beispielsweise granuliert.

Zur Verbesserung der Haftungseigenschaften und der Oberflächenbenetzung kann die Zusammensetzung, speziell für den Einsatz als Schmelzklebstoff noch weitere klebrigmachende Harze enthalten, speziell Siliconharze die freie OH-Gruppen oder reaktive Alkoxygruppen enthalten. Vorzugsweise enthält die Zusammensetzung 5 - 20 Gewichtsteile eines klebrigmachenden Siliconharzes.

Gegebenenfalls können auch noch weitere Silane wie Methyltrimethoxysilan oder Vinyltrimethoxysilane oder andere übliche Wasserfänger enthalten sein.

Daneben können weitere übliche Additive enthalten sein. Füllstoffe wie Calciumcarbonat, Magnesiumcarbonat, Zinkcarbonat oder auch Metalloxide wie Titandioxid oder Aluminiumoxid. Ferner verstärkende Füllstoffe wie pyrogene oder gefällte Kieselsäuren und weiterhin UV-Absorber. Weiterhin können in den Zusammensetzungen zur Einstellung der Verarbeitungseigenschaften übliche Weichmacher, Antioxidantien und Pigmente enthalten sein. Vorzugsweise enthält die Zusammensetzung 5 - 20 Gewichtsteile eines Weichmachers.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen und alle Drücke 0,10 MPa (abs.). Die Bestimmung der Viskositäten wurde an einem luftgelagerten Kegel-Platte Rheometer (CVO 75, Fa. Bohlin) durchgeführt. Der verwendete Messkegel hat einen Durchmesser von 1 bzw. 2 cm mit einem Kegelwinkel von 1°. Es wurden mit einer Oszillationsfrequenz von 0 - 10 Hz gemessen. Die Viskosität bei vorgebener Temperatur wurde aus der Steigung im Schubspannung-Scherraten-Diagramm bestimmt. Die Temperaturabhängigkeit der Viskosiät wurde bei einer konstanten Schubspannung von 5000 Pa bestimmt.

Die Bestimmung der Molekularmassen wurde mittels GPC (HP1090) in Toluol (0,5 ml/min) bei 23 °C bestimmt; Säule: PLgel Mixed C + PLgel 100 A; Detektor: RI ERC7515.

### Beispiele

Herstellung von Isocyanatomethyl-trimethoxysilan:
Ausgehend von Chlormethyltrimethoxysilan wird Methylcarbamatomethyl-trimethoxysilan gemäß bekannter Verfahren (US 3,494,951) synthetisiert.
Dieses wird in ein Quarz-Pyrolyserohr, das mit Quarzwolle gefüllt ist, im Argon-Gasstrom eingepumpt. Die Temperatur im Pyrolyserohr beträgt zwischen 420 und 470 C. Das Rohprodukt wird am Ende der beheizten Strecke mit Hilfe eines Kühlers auskondensiert und gesammelt. Die farblose Flüssigkeit wird durch Destillation unter reduziertem Druck gereinigt. Über Kopf geht bei ca. 88-90 C (82 mbar) das gewünschte Produkt in über 99 %-iger Reinheit über, während im Sumpf das nicht umgesetzte Carbamat reisoliert werden kann. Dieses wird der Pyrolyse direkt wieder zugeführt.

Ausgehend von 56,9 g (273 mmol) Methylcarbamatomethyl-trimethoxysilan werden so 33,9 g (191 mmol) des gewünschten Produkts Isocyanatomethyl-trimethoxysilan in einer Reinheit > 97 % enthalten. Dies entspricht einer Ausbeute von 70 % d. Th.

### Beispiel 1a (nicht erfindungsgemäß):

250 g (66 mmol) α,ω-Bisaminpropylpolydimethylsiloxan mit einem mittleren Molekulargewicht von 3800 werden bei 80 °C 0,5 h im Vakuum ausgeheizt, auf 60 °C abgekühlt und anschließend mit 250 ml trockenem THF versetzt. Zu der Lösung wird rasch ein Gemisch aus 11,2 g (52 mmol) Isophorondiisocyanat und 6,0 g (3,1 mmol) Isocyanatopropyltrimethoxysilan (erhältlich von CK-Witco unter Silquest® Y-5187) zudosiert. Die Umsetzung läßt sich an der Zunahme der Viskosität der Lösung und mittels FT-IR verfolgen. Die Lösung wird weiter 1 h bei 60 °C gerührt. Die Umsetzung ist abgeschlossen, wenn im FT-IR keine NCO-Bande mehr sichtbar ist.

Anschließend wird das THF im Vakuum abgezogen. Man erhält ein farbloses Polymer mit einem Erweichungsbereich von 85 - 95 °C und einer Viskosität von 70 Pas bei 90°C.

### Untersuchung des Aushärtverhaltens:

Im wesentlichen werden zwei Tests zur Charakterisierung der Aushärtung durchgeführt. Die Polymerlösung in THF wird mit 200 ppm Dibutylzinndilaurat versetzt und im Vakuum eingedampft.
a) Qualitativer Test zur Bestimmung des Schmelzbereichs Von der eingedampften Polymerlösung werden 50 - 100 mg Substanz auf einer Glasplatte (76 x 26 mm) aufgetragen und mit einer zweiten Glasplatte (im Winkel von 90°) abgedeckt. Der Sandwich wird auf einer Heizplatte mit 2 °C pro Minute aufgeheizt. Das Aufschmelzen wird durch Scherung der beiden Platten gegeneinander bei verschiedenen Temperaturen verfolgt. Der Schmelzvorgang ist abgeschlossen, wenn sich die beiden Platten leicht gegeneinander verschieben lassen. Man erhält einen kontinuierlichen Anstieg der Erweichungstemperatur von etwa 105 °C nach 2 h, auf 150°C nach 5 h und 240 °C nach 24 h. Nach 48 h ist ein Aufschmelzen nur noch unter teilweiser Zersetzung bei Temperaturen über 250°C möglich. Die Aushärtung kann durch Verwendung unterschiedlicher Alkoxysilane und Katalysatormengen deutlich beschleunigt oder verlangsamt werden. Für das Silan Isocyanatopropyl-trimethoxysilan ist die Aushärtung bei allen Beispielen vergleichbar schnell, lediglich die Viskositäten und Schmelztemperaturen unterscheiden sich in Abhängigkeit von der Polymerzusammensetzung. Auf die genauere Auswertung der anderen Beispiele wurde daher verzichtet. Im Falle des Silans Isocyanatomethyl-trimethoxysilan ist die Probe bereits nach 2 h nicht mehr aufschmelzbar.
b) Bestimmung der Schmelzviskosität
   Eingedampfte und mit Katalysator versetzte Proben (wie oben beschrieben) können mittels Viskosimetrie ebenso in der Aushärtung untersucht werden. Dabei wird die Viskosität temperaturabhängig in Abhängigkeit von der Härtungszeit an Luft untersucht. Im vorliegenden Beipiel steigt die Viskosität nach 2 h auf 15 kPas bei 110°C an.

### Herstellung von Prüfkörpern für die Zugprüfung:

Die Polymerlösung in THF wird mit 200 ppm Dibutylzinndilaurat versetzt und in Teflonschalen (10 x 10 cm, 5 mm Schichtdicke) ausgegossen und im Vakuum langsam bei 25 - 60 °C eingedampft. Die so erhaltenen Prüfplatten werden bei Raumtemperatur 14 Tage an Luft gelagert und anschließend Prüfkörper ausgestanzt. Die Ergebnisse der Zugprüfung (Reißfestigkeit, Reißdehnung und Modul) sind in Tabelle 1 zusammengestellt.

### Herstellung von Prüfkörpern für Haftungstest:

Das oben beschriebene eingedampfte und mit 200 ppm versetzte Produkt wird auf gereinigte Prüfkörper (Glas, Aluminium und PVC, 90 x 30 mm) aus der Schmelze aufgetragen und nach Abkühlung bei Raumtermperatur 14 Tage gelagert. Die Haftung wird qualitativ durch Ablösungsversuche mittels eines Metallspatels untersucht. Die Bewertung erfolgt qualitativ mit folgender Einstufung: Haftung (+) , Teilhaftung (O) , keine Haftung (-) . Die Ergebnisse sind ebenso in Tabelle 1 zusammengestellt.

### Beispiel 1b: nicht erfindungsgemäß

250 g (66 mmol) α,ω-Bisaminpropylpolydimethylsiloxan mit einem mittleren Molekulargewicht von 3800 werden bei 80 °C 0,5 h im Vakuum ausgeheizt, auf 60 °C abgekühlt und anschließend mit 250 ml trockenem THF versetzt. Zu der Lösung wird rasch ein Gemisch aus 11,2 g (52 mmol) Isophorondiisocyanat und 5,5 g (31 mmol) Isocyanatomethyl-trimethoxysilan zudosiert. Die Umsetzung läßt sich an der Zunahme der Viskosität der Lösung und mittels FT-IR verfolgen. Die Lösung wird weiter 1 h bei 60 °C gerührt. Die Umsetzung ist abgeschlossen, wenn im FI-IR keine NCO-Bande mehr sichtbar ist. Anschließend wird das THF im Vakuum abgezogen. Man erhält ein farbloses Polymer mit einem Erweichungsbereich von 90 - 100 °C und einer Viskosität von 80 Pas bei 90°C.

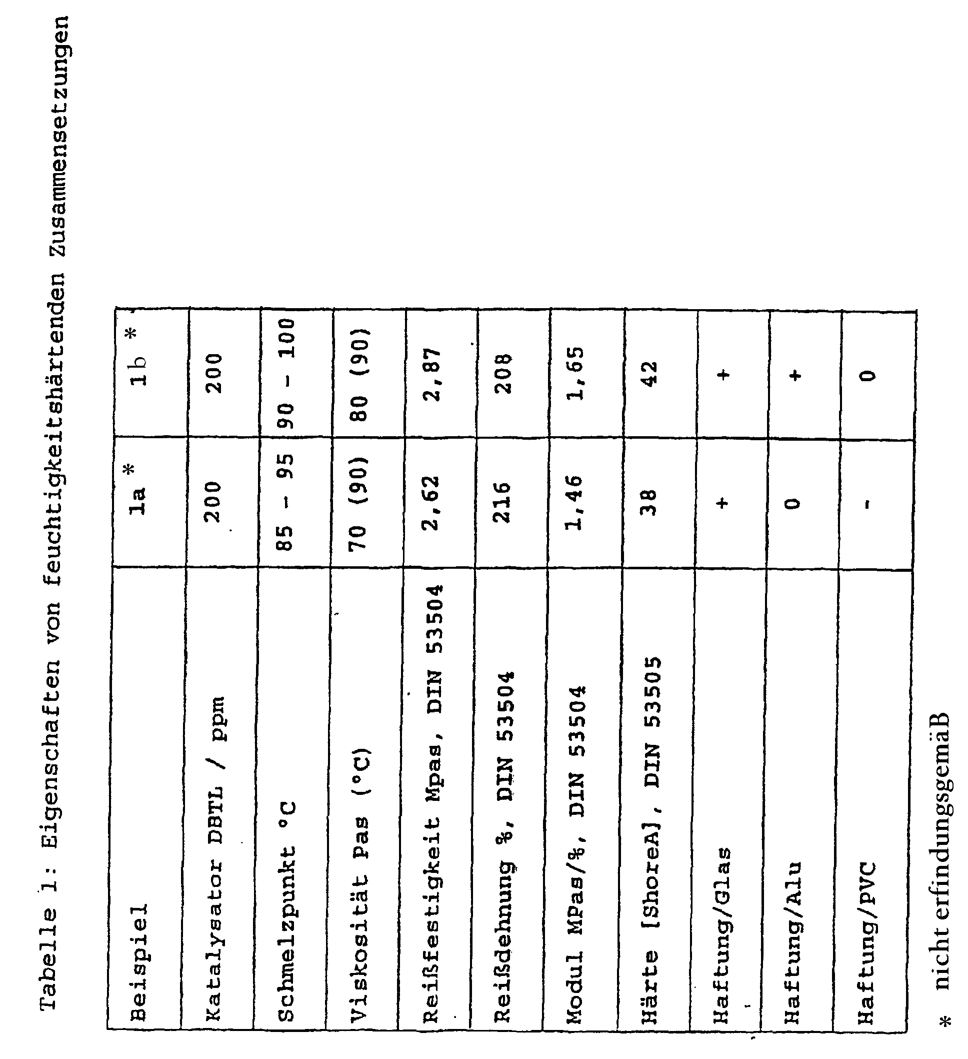

## Patentansprüche

1. Feuchtigkeitsvernetzbare Zusammensetzungen, enthaltend
(A) 100 Gewichtsteile an silanterminiertem Polydiorganosiloxan-Urea/Urethan-Copolymer der allgemeinen Formel 1 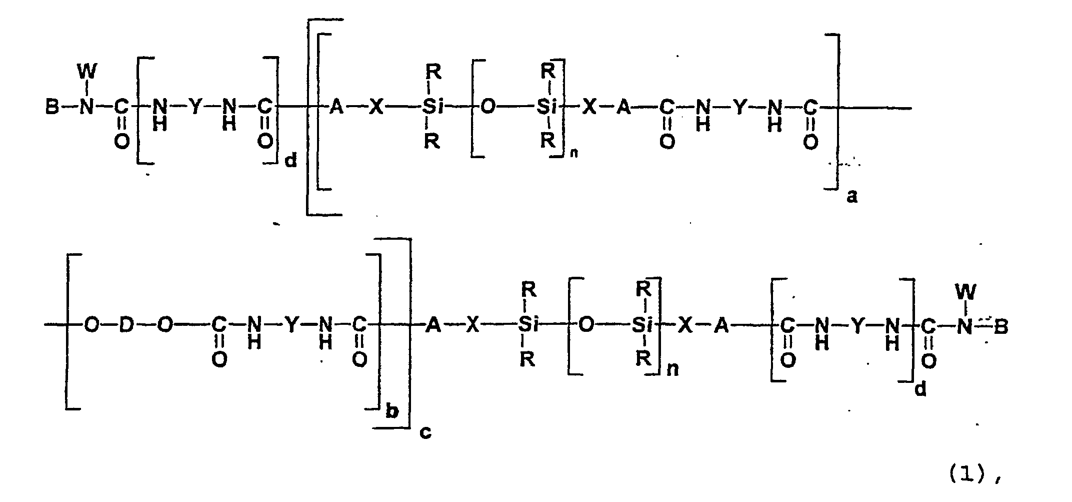 worin
R einen einwertigen, gegebenenfalls durch Fluor oder Chlor substituierten Kohlenwasserstoffrest mit 1 bis 20 Kohlenstoffatomen,
X einen Alkylen-Rest mit 1 bis 20 Kohlenstoffatomen, in dem einander nicht benachbarte Methyleneinheiten durch Gruppen -O- ersetzt sein können,
A ein Sauerstoffatom oder eine Aminogruppe -NR'-,
R' Wasserstoff oder einen Alkylrest mit 1 bis 10 Kohlenstoffatomen,
Y einen gegebenenfalls durch Fluor oder Chlor substituierten Kohlenwasserstoffrest mit 1 bis'20 Kohlenstoffatomen,
D einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können,
B einen Rest der allgemeinen Formel 2
- Z-Si (R¹)ₘ (R")₃₋ₘ (2),
Z einen Methylen-Rest
R¹ einen einwertigen, gegebenenfalls durch Fluor oder Chlor substituierter Kohlenwasserstoffrest mit 1 bis 12 Kohlenstoffatomen,
R" einen mit Feuchtigkeit reaktiven Rest, der ausgewählt wird aus C₁-C₄-Alkoxy-, C₁-C₂₀-Acyl-, C₁-C₆-Alkylaminooxy- und C₁-C₆-Alkyloximoresten,
W einen Rest B oder Wasserstoff,
m den Wert 0, 1 oder 2,
n eine ganze Zahl von 1 bis 300,
a eine ganze Zahl von mindestens 1,
b 0 oder eine ganze Zahl von 1 bis 30,
c eine ganze Zahl von 1 bis 30 und
d den Wert 0 oder 1 bedeuten,
mit der Maßgabe, dass die Zusammensetzung der Einheiten so gewählt ist, das das Copolymer einen Schmelzpunkt im Bereich von 30 - 200°C besitzt und
(B) 0,1 bis 20 Gewichtsteile an Silan der allgemeinen Formel 3
Ω-(CH₂)ₑ-Si (R²)_{3-f} (CH₃)_{f} (3)
wobei
Ω x eine Gruppe, die ausgewählt wird aus -NHR³, - NR³-(CH₂)_{g}-NHR³, Acryl-, Methacryl-, OCN-, -SH, Glycidoxyoder Chlorrest,
R³ Wasserstoff oder einen gegebenenfalls halogensubstuierten C₁₋₁₈-Kohlenwasserstoffrest,
R² eine Methoxy- oder Ethoxygruppe,
e die Werte 1 oder 3
f die Werte 0 oder 1 und
g Werte von 1 bis 10 bedeuten.

2. Feuchtigkeitsvernetzbare Zusammensetzungen nach Anspruch 1, bei denen die Polydiorganosiloxanabschnitte im Copolymer (A) ein Molekulargewicht Mw von 500 bis 30000 aufweisen.

3. Feuchtigkeitsvernetzbare Zusammensetzungen nach Anspruch 1 oder 2, bei denen R Methyl oder Phenyl bedeutet.

4. Feuchtigkeitsvernetzbare Zusammensetzungen nach Anspruch 1 bis 3, bei denen A eine Aminogruppe bedeutet.

5. Feuchtigkeitsvernetzbare Zusammensetzungen nach Anspruch 1 bis 4, bei denen R" einen Methoxy- oder Ethoxyrest bedeuten.

6. Feuchtigkeitsvernetzbare Zusammensetzungen nach Anspruch 1 bis 5, bei denen Ω eine Gruppe bedeutet, die ausgewählt wird aus einem Rest -NHR³, -NR³- (CH₂)_{g}-NHR³ und Glycidoxyrest.

7. Verwendung der Zusammensetzung gemäß Anspruch 1 bis 6 als einkomponentigen, über Silanendgruppen feuchtigkeitsvernetzenden Schmelzklebstoff.

## Claims

1. Moisture-crosslinkable compositions comprising
(A) 100 parts by weight of silane-terminated polydiorganosiloxane-urea/urethane copolymer of the general formula 1 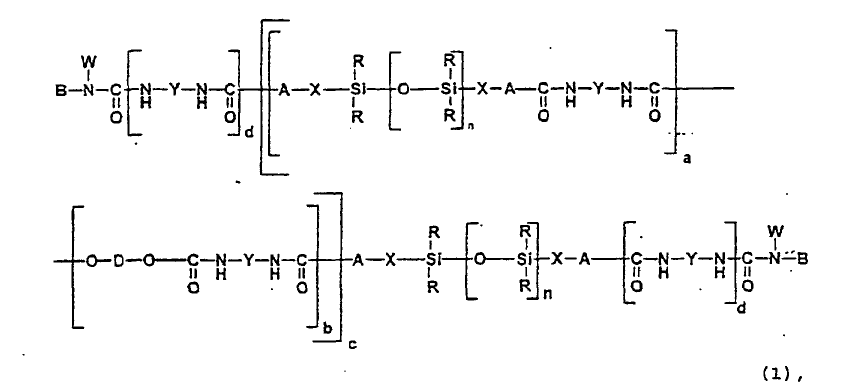 in which
**R** denotes a monovalent hydrocarbon radical, unsubstituted or substituted by fluoro or chloro and having 1 to 20 carbon atoms,
**X** denotes an alkylene radical having 1 to 20 carbon atoms, in which nonadjacent methylene units may have been replaced by -O- groups,
**A** denotes an oxygen atom or an amino group - NR'-,
**R'** denotes hydrogen or an alkyl radical having 1 to 10 carbon atoms,
**Y** denotes a hydrocarbon radical unsubstituted or substituted by fluoro or chloro and having 1 to 20 carbon atoms,
**D** denotes an alkylene radical unsubstituted or substituted by fluoro, chloro, C₁-C₆ alkyl or C₁-C₆ alkyl ester and having 1 to 700 carbon atoms, in which nonadjacent methylene units may have been replaced by -O-, -COO-, -OCO-, or -OCOO- groups,
**B** denotes a radical of the general formula 2
-Z-Si(R¹)ₘ (R'')₃₋ₘ (2)
**Z** denotes a methylene radical,
**R**^{**1**} denotes a monovalent hydrocarbon radical unsubstituted or substituted by fluoro or chloro and having 1 to 12 carbon atoms,
**R''** denotes a moisture-reactive radical selected from C₁-C₄ alkoxy, C₁-C₂₀ acyl, C₁-C₆ alkylaminooxy, and C₁-C₆ alkyloximo radicals,
**W** denotes a radical B or hydrogen,
**m** denotes 0, 1 or 2,
**n** denotes an integer from 1 to 300,
**a** denotes an integer which is at least 1,
**b** denotes 0 or an integer from 1 to 30,
**c** denotes an integer from 1 to 30, and
**d** denotes 0 or 1,
with the proviso that the composition of the units is chosen such that the copolymer possesses a melting point in the range of 30 - 200°C, and
(B) from 0.1 to 20 parts by weight of silane of the general formula 3
Ω-(CH₂)ₑ-Si(R²)_{3-f} (CH₃)_{f} (3)
where
Ω denotes a group selected from -NHR³, -NR³- (CH₂)_{g}-NHR³, acryloyl, methacryloyl, OCN, -SH, glycidyloxy or chloro radical,
**R**^{**3**} denotes hydrogen or an optionally halogen-substituted C₁₋₁₈ hydrocarbon radical,
**R**^{**2**} denotes a methoxy or ethoxy group,
**e** denotes 1 or 3,
**f** denotes 0 or 1, and
**g** denotes values from 1 to 10.

2. Moisture-crosslinkable compositions according to Claim 1, wherein the polydiorganosiloxane sections in copolymer (A) have a molecular weight Mw of from 500 to 30 000.

3. Moisture-crosslinkable compositions according to Claim 1 or 2, wherein **R** denotes methyl or phenyl.

4. Moisture-crosslinkable compositions according to Claim 1 to 3, wherein **A** denotes an amino group.

5. Moisture-crosslinkable compositions according to Claim 1 to 4, wherein R" denotes a methoxy or ethoxy radical.

6. Moisture-crosslinkable compositions according to Claim 1 to 5, wherein Ω denotes a group selected from a radical -NHR³, -NR³- (CH₂)_{g}-NHR³ , and glycidyloxy radical.

7. Use of the composition according to Claim 1 to 6 as a one-component hotmelt adhesive which is moisture-crosslinking by way of silane end groups.

## Revendications

1. Compositions réticulant sous l'effet de l'humidité, contenant
(A) 100 parties en poids d'un copolymère de polydiorganosiloxane-urée/uréthane terminé par silane de formule générale 1 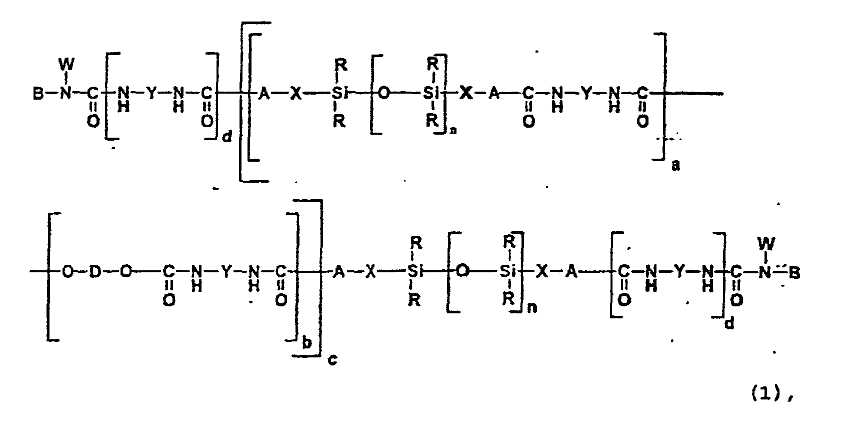 dans laquelle
R signifie un radical hydrocarboné monovalent, comprenant 1 à 20 atomes de carbone, le cas échéant substitué par fluor ou chlore,
X signifie un radical alkylène comprenant 1 à 20 atomes de carbone, dans lequel des unités méthylène non adjacentes peuvent être remplacées par des groupes -O-,
A signifie un atome d'oxygène ou un groupe amino - NR'-,
R' signifie hydrogène ou un radical alkyle comprenant 1 à 10 atomes de carbone,
Y signifie un radical hydrocarboné comprenant 1 à 20 atomes de carbone, le cas échéant substitué par fluor ou chlore,
D signifie un radical alkylène comprenant 1 à 700 atomes de carbone, le cas échéant substitué par fluor, chlore, alkyle en C₁ à C₆ ou ester d'alkyle en C₁ à C₆, dans lequel des unités. méthylène non adjacentes peuvent être remplacées par des groupes -O-, -COO-, -OCO- ou -OCOO-,
B signifie un radical de formule générale 2
-Z-Si (R¹)ₘ(R' ')₃₋ₘ (2),
Z signifie un radical méthylène
R¹ signifie un radical hydrocarboné monovalent, comprenant 1 à 12 atomes de carbone, le cas échéant substitué par fluor ou chlore,
R'' signifie un radical réactif avec l'humidité, qui est choisi parmi les radicaux alcoxy en C₁ à C₄, acyle en C₁ à C₂₀, (alkyle en C₁ à C₆)aminooxy et (alkyle en C₁ à C₆)oximo,
W signifie un radical B ou hydrogène
m vaut 0, 1 ou 2,
n signifie un nombre entier de 1 à 300,
a signifie un nombre entier d'au moins 1
b signifie 0 ou un nombre entier de 1 à 30,
c signifie un nombre entier de 1 à 30 et
d vaut 0 ou 1
à condition que la composition des unités soit choisie de telle manière que le copolymère présente un point de fusion dans la plage de 30 à 200°C et
(B) 0,1 à 20 parties en poids de silane de formule générale 3
-Ω-(CH₂)ₑ-Si(R²)_{3-f}(CH₃)_{f} (3)
où
Ω signifie un groupe choisi parmi les radicaux - NHR³, -NR³-(CH₂)_{g}-NHR³, acryle, méthacryle, OCN-, - SH, glycidoxy ou chlore,
R³ signifie hydrogène ou un radical hydrocarboné en C₁ à C₁₈ éventuellement substitué par halogène,
R² signifie un groupe méthoxy ou éthoxy,
e vaut 1 ou 3
f vaut 0 ou 1 et
g vaut 1 à 10.

2. Compositions réticulables sous l'effet de l'humidité selon la revendication 1, dans lesquelles les fractions de polydiorganosiloxane dans le copolymère (A) présentent un poids moléculaire Mw de 500 à 30 000.

3. Compositions réticulables sous l'effet de l'humidité selon la revendication 1 ou 2, dans lesquelles R signifie méthyle ou phényle.

4. Compositions réticulables sous l'effet de l'humidité selon les revendications 1 à 3, dans lesquelles A signifie un groupe amino.

5. Compositions réticulables sous l'effet de l'humidité selon les revendications 1 à 4, dans lesquelles R" signifie un radical méthoxy ou éthoxy.

6. Compositions réticulables sous l'effet de l'humidité selon les revendications 1 à 5, dans lesquelles Ω signifie un groupe choisi parmi un radical -NHR³, -NR³-(CH₂)_{g}-NHR³ et un radical glycidoxy.

7. Utilisation de la composition selon la revendication 1 à 6 comme adhésif en masse fondue à un composant réticulant sous l'effet de l'humidité via des groupes terminaux silane.
